# EUROPEAN PATENT APPLICATION

(11) **EP 4 793 298 A1**
(43) Date of publication of application: **19.08.2026**
(21) Application number: 25305205.4
(22) Date of filing: 17.02.2025
(51) Int. Cl.: C08F 14/22, C08F 30/02, C08F 214/22, C08F 230/02, C09D 5/08, C09D 127/16

(54) **FLUORINATED PHOSPHORUS-CONTAINING COPOLYMERS**

(71) Applicant: ARKEMA FRANCE, 92800 Puteaux (FR); Centre National de la Recherche Scientifique, 75016 Paris (FR); Université de Montpellier, 34090 Montpellier (FR); Ecole Nationale Supérieure de Chimie de Montpellier, 34090 Montpellier (FR)
(72) Inventor: EID, Nadim, 69491 Pierre-Benite (FR); BONNET, Anthony, 92700 Colombes (FR); DEVISME, Samuel, 92700 Colombes (FR); LIM, Jongmin, 34293 Montpellier (FR); AMEDURI, Bruno, 34293 Montpellier (FR)
(74) Representative: Bandpay & Greuter

(57) **Abstract**

A copolymer comprising units derived from at least one fluorinated comonomer and at least one comonomer of formula (I): 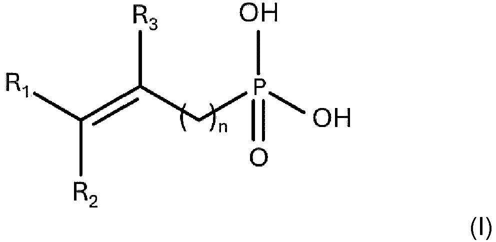 wherein R₁, R₂ and R₃ are individually selected from the group consisting of: hydrogen atoms; halogen atoms; carboxyl group; carboxylic acid groups; ether groups; thioether groups; amine groups; amide groups; sulfonimide groups; urethane groups; a phosphonic acid group; a sulfonic acid group; a sulfonyl fluoride group; linear, branched and cyclic alkyl groups with or without one or more substituents; aromatic groups with or without one or more substituents; linear, branched and cyclic alkenyl groups with or without one or more substituents; linear, branched and cyclic alkynyl groups with or without one or more substituents;
the substituents being selected from halogen atoms; aromatic groups; heterocyclic groups; carboxylic acid-containing groups; amine-containing groups, amide-containing groups; urethane-containing groups; phosphonic acid-containing groups; sulfonic acid-containing groups; sulfonyl fluoride-containing groups; thioether-containing groups and ether-containing groups;
wherein n is from 0 to 5, preferably from 0 to 3, even more preferably from 0 to 2.

The invention also relates to a method for preparing the copolymer as well as a use of the copolymer as a coating agent or a membrane.

## Description

### Technical field

The present invention relates to a copolymer comprising units derived from at least one comonomer of formula (I) as described in detail below and from at least one fluorinated comonomer. The present invention also relates to a method for preparing the copolymer as well as to the use of the copolymer as a coating agent or a membrane.

### Technical background

Fluoro-polymers are high value-added materials, due to their unique properties such as thermal stability, chemical inertness (to solvents, oils, water, acids and bases), low values of the refractive index, permittivity, dissipation factor, and water absorption as well as excellent weather durability and resistance to oxidation. These polymers are used in various fields from the chemical and biomedical industries to electronics, aviation, automotive and energy applications such as anti-corrosive coating materials, water purification membranes, mechanical parts for semiconductor processing, piezoelectric sensors, and lithium-ion/sodium-ion battery binders.

On the other hand, phosphorus-containing polymers are interesting materials with other complementary properties such as high acidity, anticorrosion, adhesion, flame retardancy, proton exchange conductivity, biomedical compatibility and complexing ability for multiple applications (e.g. flame retardants, proton exchange membrane fuel cells (PEMFCs), dispersants, protective coatings).

Fluorinated polymers are generally produced by radical polymerization in aqueous emulsion, suspension, or solution under high pressure (even supercritical CO₂).

Only a few copolymers containing units derived from fluorine-based comonomers and phosphorus-containing monomers have been reported.

The research article *"*Use of poly(vinylidene fluoride-co-vinyl dimethylphosphonate) copolymers for efficient extraction of valuable metals" by M. Wehbi et al., Polymer Chemistry 10: 4173-4184 (2019), relates to the radical copolymerization of vinylidene fluoride (VDF) with vinyl dimethyl phosphonate (VDMP) and the use of the resultant poly(VDF-co-VDMP) copolymer for the selective extraction of several metals in acidic media.

The research article *"*Solid polymer electrolytes from copolymers based on vinyl dimethyl phosphonate and vinylidene fluoride" by L. Bai et al., Macromolecular Chemistry and Physics 222, 2000389 (2021), relates to solid polymer electrolytes (SPE) prepared by mixing lithium bis(trifluoromethanesulfonyl)imide with poly(VDF-co-VDMP) copolymers for ionic conductivity and fire-retardancy.

The research article *"*Poly(vinylidene fluoride) containing phosphonic acid as anticorrosion coating for steel" by S. Banerjee et al., ACS Applied materials & interfaces 9, 6433-6443 (2017), relates to a copolymer containing vinylidene fluoride (VDF) and (dimethoxyphosphoryl)methyl 2-trifluoromethacrylate (MAF-DMP) units obtained by radical polymerization displaying anti-corrosion properties.

The research article *"*Synthesis of fluorinated phosphorus-containing copolymers and their immobilization and properties on stainless steel" by F. Kousar et al., RSC Advances 11, 38189 (2021), refers to a series of fluorinated-poly(phosphonic acid methacrylate)s synthetized by free radical polymerization using heptadecafluorodecyl methacrylate (HDFDMA) and (dimethoxyphosphoryl) methyl methacrylate (DMPMM) monomers for potential application as anti-corrosion coatings.

The research article *"*One-step multifunctionalization of flax fabrics for simultaneous flame-retardant and hydro-oléophobic properties using radiation-induced graft polymerization" by J. Taibi et al., Polymers 15, 2169 (2023), relates to the one-step radiografting of flax fabrics with phosphonated and fluorinated polymer chains using dimethyl(methacryloxy)methyl phosphonate (MAPC1), 2-(perfluorobutyl)ethyl methacrylate (M4), 1H,1H,2H,2H-perfluorooctyl acrylate (AC6) and 1H,1H,2H,2H-perfluorodecyl methacrylate (M8) displaying very good hydro-oleophobic and flame-retardant properties.

However, these copolymers have chemical functions that are not stable, leading to copolymer degradation, such as ester groups that undergo saponification leading to hydroxy alkyl phosphonates. Besides, these copolymers are prepared by complex preparation methods that can damage the final copolymer, for example due to a hydrolysis step to favor phosphonic acid function, or an activation step by electron beam radiation hampering the mechanical properties of the material.

Within this context, there is a need to synthesize fluoro-phosphorus based copolymers having a broader range of chemical functionalization with specific physicochemical properties such as a high thermal stability, crystallinity and average molar mass, wherein the method is straightforward without hampering the final physicochemical properties of the copolymer and does not give rise to toxicity issues. The copolymers may for example serve to make more efficient coating agents to prevent corrosion, or to make more efficient membranes for fuel cells.

### Summary of the invention

The invention relates to a copolymer comprising units derived from at least one fluorinated comonomer and at least one comonomer of formula (I): 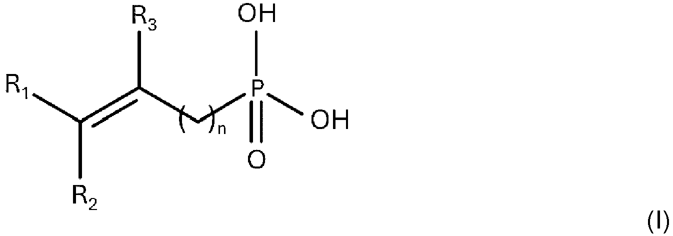
wherein R₁, R₂ and R₃ are individually selected from the group consisting of: hydrogen atoms; halogen atoms; carboxyl group; carboxylic acid groups; ether groups; thioether groups; amine groups; amide groups; sulfonimide groups; urethane groups; a phosphonic acid group; a sulfonic acid group; a sulfonyl fluoride group; linear, branched and cyclic alkyl groups with or without one or more substituents; aromatic groups with or without one or more substituents; linear, branched and cyclic alkenyl groups with or without one or more substituents; linear, branched and cyclic alkynyl groups with or without one or more substituents;
the substituents being selected from halogen atoms; aromatic groups; heterocyclic groups; carboxylic acid-containing groups; amine-containing groups; amide-containing groups; phosphonic acid-containing groups; urethane-containing groups; sulfonic acid-containing groups; sulfonyl fluoride-containing groups; thioether-containing groups; and ether-containing groups;
wherein n is from 0 to 5, preferably from 0 to 3, even more preferably from 0 to 2.

In some embodiments, the fluorinated comonomer is selected from the group consisting of: vinylidene fluoride (VDF); vinyl fluoride; trifluoroethylene (VF₃); chlorotrifluoroethylene (CTFE); 1,2-difluoroethylene; tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE), perfluoro(propylvinyl)ether (PPVE), perfluoro(1,3-dioxole), perfluoro(2,2-dimethyl-1,3-dioxole) (PDD); the compound of formula F₂C=CF-CₐF₂ₐ₊₁ in which a is 1, 2, 3, 4, 6, 8, 10; compounds of formula CF₂=CFOCF₂CF(CF₃)OCF₂CF₂X in which X is SO₂F, CO₂H, CH₂OH, CH₂OCN or CH₂PO₃H; the compound of formula CF₂=CFOCF₂CF₂SO₂F; the compound of formula CF₂=CFO(CF₂)₄SO₂F; the compound of formula F₂C=CF-Y, in which Y is a phenyl group; the compound of formula F(CF₂)_{b}CH₂OCF=CF₂ in which b is 1, 2, 3, 4 or 5; the compound of formula R⁴CH₂OCF=CF₂ in which R⁴ is hydrogen or F(CF₂)_{c} and c is 1, 2, 3 or 4; the compound of formula R⁵OCF=CH₂ in which R⁵ is F(CF₂)_{d} and d is 1, 2, 3 or 4; perfluorobutyl ethylene (PFBE); compounds of formula H₂C=CH-CₑF₂ₑ₊₁ in which e is 4, 6 or 8; compounds of formula H₂C=CF-CO₂R⁶ in which R⁶ is H or C_{f}H_{2f+1} in which f is 1 to 10; compounds of formula F₂C=CF-CO₂R⁷ in which R⁷ is H or C_{g}H_{2g+1} in which g is 1 to 10; compounds of formula F₂C=C(CF₃)-CO₂R⁸ in which R⁸ is H or CₕH₂ₕ₊₁ in which h is 1 to 10 ; compounds of formula F₂C=C(CH₃)-CO₂R⁹ in which R⁹ is H or CₕH₂ₕ₊₁ in which h is 1 to 10 ; 3,3,3-trifluoropropene; 2,3,3,3-tetrafluoropropene; (E)-1,3,3,3-tetrafluoropropene; (Z)-1,3,3,3-tetrafluoropropene; hexafluoroisobutylene; perfluorobutylethylene; pentafluoropropene; bromotrifluoroethylene; chlorofluoroethylene; chlorotrifluoropropene; and combinations thereof; wherein, preferably, the fluorinated comonomer comprises or is vinylidene fluoride.

In some embodiments, R₁, R₂ and R₃ are selected from a hydrogen atom, a halogen atom, a methyl group, an ethyl group, a propyl group, an isopropyl group, a n-butyl group or a perfluoroalkyl group having 1 to 8 carbon atoms; preferably R₁ and R₂ are selected from a hydrogen atom, a methyl group, a trifluoromethyl group, a fluorine atom, a chlorine atom, a bromine atom; even more preferably R₁, R₂ and/or R₃ is a hydrogen atom, most preferably both are a hydrogen atom.

In some embodiments, the copolymer comprises:
- from 1 to 99 mol.%, preferably from 20 to 99 mol.% and even more preferably from 50 to 99 mol.% of the units derived from the fluorinated comonomer(s);
- from 1 to 99 mol.%, preferable from 1 to 80 mol.% and even more preferably from 1 to 50 mol.% of the units derived from the comonomer(s) of formula (I).

In some embodiments, the copolymer has a number average molar mass from 500 to 100000 g.mol⁻¹, preferably from 1000 to 75000 g.mol⁻¹ and even more preferably from 2000 to 50000 g.mol⁻¹.

The invention also relates to a method for preparing the copolymer, comprising:
- a first step of putting in contact the at least one comonomer of formula (I) with a polymerization initiator in a solvent;
- a second step of adding the at least one fluorinated comonomer.

In some embodiments, the polymerization initiator is chosen from a peroxide, a persulfate, a percarbonate, a peracid, a peroxycarbonate, a perester, or combinations thereof.

In some embodiments, the solvent is a polar protic solvent, a polar aprotic solvent or a mixture thereof.

In some embodiments, the polymerization is carried out at a temperature from 40 to 200 °C, more preferably from 75 to 175 °C and even more preferably from 100 to 150 °C.

In some embodiments, the polymerization time is from 30 min to 100 h, preferably from 1 to 80 h and even more preferably from 2 to 24 h.

In some embodiments, the polymerization is carried out at a pressure from 1 to 100 bar, preferably from 5 to 60 bar and even more preferably from 15 to 50 bar.

The invention also relates to the use of the copolymer described above as a powder for complexing heavy metals to purify water, as a coating agent especially for flame retardancy and corrosion protection, as an electrode binder for a rechargeable battery, or for making a membrane, notably for filtrating water or to conduct protons in a proton-exchange membrane fuel cell.

The invention makes it possible to address the needs expressed above.

The synthesis of copolymers from the comonomer of formula (I) and the fluorinated comonomer allows for a high chemical diversity and therefore avoids post-functionalization reactions.

In particular, such copolymers may have improved anti-corrosive properties and adhesive properties for use as coating agents. In particular, such copolymers exhibit better anti-corrosive and/or adhesive properties than fluorovinyl alkyl phosphonate copolymers.

### Brief description of the drawings

Non-limiting examples will now be described in reference to the accompanying drawings, where:
Figure 1 represents ¹H-NMR spectra of copolymers C and H according to example 1.
Figure 2 represents ¹⁹F-NMR spectra of copolymers C and H according to example 1.
Figure 3 represents ³¹P-NMR spectra of copolymers C and H according to example 1.

### Detailed description

The invention will now be described in more detail without limitation in the following description.

The invention relates to a copolymer comprising units derived from at least one fluorinated comonomer and at least one comonomer of formula (I): 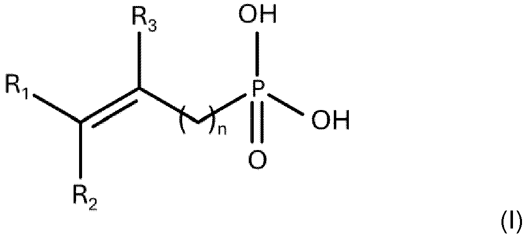
wherein R₁, R₂ and R₃ are individually selected from the group consisting of: hydrogen atoms; halogen atoms; carboxyl group; carboxylic acid groups; ether groups; thioether groups; amine groups; amide groups; sulfonimide groups; urethane groups; a phosphonic acid group; a sulfonic acid group; a sulfonyl fluoride group; linear, branched and cyclic alkyl groups with or without one or more substituents; aromatic groups with or without one or more substituents; linear, branched and cyclic alkenyl groups with or without one or more substituents; linear, branched and cyclic alkynyl groups with or without one or more substituents;
the substituents being selected from halogen atoms; aromatic groups; heterocyclic groups; carboxylic acid-containing groups; amine-containing groups; amide-containing groups; urethane-containing groups; phosphonic acid-containing groups; sulfonic acid-containing groups; sulfonyl fluoride-containing groups; thioether-containing groups and ether-containing groups;
wherein n is from 0 to 5, preferably from 0 to 3, even more preferably from 0 to 2.

### Fluorinated comonomer

The fluorinated comonomer differs from the comonomer of formula (I). By *"fluorinated comonomer"* is meant a monomer comprising at least one fluorine atom and at least one carbon-carbon double bond (C=C), and excluding compounds of formula (I).

In some embodiments, the fluorinated comonomer comprises from 2 to 6 carbon atoms, preferably from 2 to 5 carbon atoms, more preferably from 2 to 4 carbon atoms, even more preferably from 3 to 4 carbon atoms, and most preferably 2 carbon atoms.

Preferably, the fluorinated comonomer comprises a single double bond.

In some embodiments, the fluorinated comonomer is selected from the group consisting of vinylidene fluoride; vinyl fluoride; trifluoroethylene (VF₃); chlorotrifluoroethylene (CTFE); 1,2-difluoroethylene; tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE), perfluoro(propylvinyl)ether (PPVE), perfluoro(1,3-dioxole), perfluoro(2,2-dimethyl-1,3-dioxole) (PDD); the compound of formula F₂C=CF-CₐF₂ₐ₊₁ in which a is 1, 2, 3, 4, 6, 8, 10; compounds of formula CF₂=CFOCF₂CF(CF₃)OCF₂CF₂X in which X is SO₂F, CO₂H, CH₂OH, CH₂OCN or CH₂PO₃H; the compound of formula CF₂=CFOCF₂CF₂SO₂F; the compound of formula CF₂=CFO(CF₂)₄SO₂F; the compound of formula F₂C=CF-Y, in which Y is a phenyl group; the compound of formula F(CF₂)_{b}CH₂OCF=CF₂ in which b is 1, 2, 3, 4 or 5; the compound of formula R⁴CH₂OCF=CF₂ in which R⁴ is hydrogen or F(CF₂)_{c} and c is 1, 2, 3 or 4; the compound of formula R⁵OCF=CH₂ in which R⁵ is F(CF₂)_{d} and d is 1, 2, 3 or 4; perfluorobutyl ethylene (PFBE); compounds of formula H₂C=CH-CₑF₂ₑ₊₁ in which e is 4, 6 or 8; compounds of formula H₂C=CF-CO₂R⁶ H or C_{f}H_{2f+1} in which f is 1 to 10; compounds of formula F₂C=CF-CO₂R⁷ in which R⁷ is H or C_{g}H_{2g+1} in which g is 1 to 10; compounds of formula F₂C=C(CF₃)-CO₂R⁸ in which R⁸ is H or CₕH₂ₕ₊₁ in which h is 1 to 10 ; compounds of formula F₂C=C(CH₃)-CO₂R⁹ in which R⁹ is H or CₕH₂ₕ₊₁ in which h is 1 to 10; 3,3,3-trifluoropropene; 2,3,3,3-tetrafluoropropene; (E)-1,3,3,3-tetrafluoropropene; (Z)-1,3,3,3-tetrafluoropropene; hexafluoroisobutylene; perfluorobutylethylene; pentafluoropropene; bromotrifluoroethylene; chlorofluoroethylene; chlorotrifluoropropene; and combinations thereof.

Preferably, the fluorinated comonomer is vinylidene fluoride.

In other embodiments, the fluorinated comonomer may comprise vinylidene fluoride and one or more other fluorinated comonomers. Examples of other such comonomers are vinyl fluoride; trifluoroethylene; chlorotrifluoroethylene (CTFE); 1,2-difluoroethylene, tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE) or perfluoro(propyl vinyl)ether (PPVE); perfluoro(1,3-dioxole); perfluoro(2,2-dimethyl-1,3-dioxole) (PDD); the product of formula CF₂=CFOCF₂CF(CF₃)OCF₂CF₂X in which X is SO₂F, CO₂H, CH₂OH, CH₂OCN or CH₂PO₃H; the product of formula CF₂=CFOCF₂CF₂SO₂F; the product of formula CF₂=CFO(CF₂)₄SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; perfluorobutylethylene (PFBE); 3,3,3-trifluoropropene or 2-trifluoromethyl-3,3,3-trifluoro-1-propene.

### Comonomer of formula (I)

Formula (I) is the following: 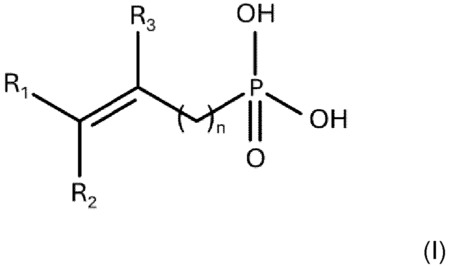
wherein R₁, R₂ and R₃ are individually selected from the group consisting of: hydrogen atoms; halogen atoms; carboxyl group; carboxylic acid groups; ether groups; thioether groups; amine groups; amide groups; sulfonimide groups; urethane groups; a phosphonic acid group; a sulfonic acid group; a sulfonyl fluoride group; linear, branched and cyclic alkyl groups with or without one or more substituents; aromatic groups with or without one or more substituents; linear, branched and cyclic alkenyl groups with or without one or more substituents; linear, branched and cyclic alkynyl groups with or without one or more substituents;
the substituents being selected from halogen atoms; perfluoro groups, aromatic groups; heterocyclic groups; carboxylic acid-containing groups; amine-containing groups; amide-containing groups; urethane-containing groups; phosphonic acid-containing groups; sulfonic acid-containing groups; sulfonyl fluoride-containing groups; thioether-containing groups and ether-containing groups;
wherein n is from 0 to 5, preferably from 0 to 3, even more preferably from 0 to 2.

In some embodiments, R₁, R₂ and R₃ are individually selected from the group consisting of: hydrogen atoms; halogen atoms; linear, branched and cyclic unsubstituted alkyl groups; unsubstituted aromatic groups; linear, branched and cyclic unsubstituted alkenyl groups; linear, branched and cyclic unsubstituted alkynyl groups.

In some embodiments, R₁, R₂ and/or R₃ may comprise from 0 to 3 carbon atoms, preferably from 0 to 2 carbon atoms, more preferably from 0 to 1 carbon atom.

In some embodiments, the R₁, R₂ and R₃ groups may independently be a chlorine atom, a bromine atom, a iodine atom or a fluorine atom.

In other embodiments, the R₁, R₂ and R₃ groups may independently be a carboxyl group.

In other embodiments, the R₁, R₂ and R₃ groups may independently be a ether group and may include but are not limited to C2-C10, preferably C2-C5, more preferably C2-C4, even more preferably C2-C3 ether-containing groups.

In other embodiments, the R₁, R₂ and R₃ groups may independently be a thioether group and may include but are not limited to C2-C10, preferably C2-C5, more preferably C2-C4, even more preferably C2-C3 thioether-containing groups.

In other embodiments, the R₁, R₂ and R₃ groups may independently be a sulfonimide group and may include but are not limited to C2-C10, preferably C2-C5, more preferably C2-C4, even more preferably C2-C3 sulfonimide-containing groups.

In other embodiments, the R₁, R₂ and R₃ groups may independently be a urethane group and may include but are not limited to C2-C10, preferably C2-C5, more preferably C2-C4, even more preferably C2-C3 urethane-containing groups.

In other embodiments, the R₁, R₂ and R₃ groups may independently be an amine group and may include but are not limited to C2-C10, preferably C2-C5, more preferably C2-C4, even more preferably C2-C3 amine-containing groups.

In other embodiments, the R₁, R₂ and R₃ groups may independently be an amide group and may include but are not limited to C1-C10, preferably C1-C5, more preferably C1-C4, even more preferably C1-C3, most preferably C1-C2 amide-containing groups.

In other embodiments, the R₁, R₂ and R₃ groups may independently be a carboxylic acid group and may include but are not limited to C1-C10, preferably C1-C5, more preferably C1-C4, even more preferably C1-C3, most preferably C1-C2 carboxylic acid-containing groups.

In other embodiments, the R₁, R₂ and R₃ groups may independently be a phosphonic acid group.

In other embodiments, the R₁, R₂ and R₃ groups may independently be a sulfonic acid group.

In other embodiments, the R₁, R₂ and R₃ groups may independently be a sulfonyl fluoride group.

In other embodiments, the R₁, R₂ and R₃ groups may independently be a C1-C10, linear alkyl group, including but not limited to methyl, ethyl, *n*-propyl, *n-*butyl, *n*-pentyl, *n-h*exyl*, n*-heptyl, *n*-octyl, *n*-nonyl, and *n*-decyl. Preferably, the R₁, R₂ and R₃ groups may independently be a C1-C5 linear alkyl group or a C1-C3 linear alkyl group.

In other embodiments, the R₁, R₂ and R₃ groups may also independently be a C3-C10, branched alkyl group, including but not limited to isopropyl, isobutyl, *sec*-butyl, *tert*-butyl, neopentyl, isoamyl, cyclohexylmethyl, *tert*-pentyl, and isooctyl. Preferably, the R₁, R₂ and R₃ groups may independently be a C3-C4 branched alkyl group.

In other embodiments, the R₁, R₂ and R₃ groups may also independently be a C3-C12 cyclic alkyl group, including but not limited to cyclopropyl, cyclobutyl, cyclopentyl, cyclohexyl, cycloheptyl, cyclooctyl, cyclononyl, cyclodecyl, cycloundecyl, and cyclododecyl. Preferably, the R₁, R₂ and R₃ groups may independently be a C3-C6 cyclic alkyl group.

In other embodiments, the R₁, R₂ and R₃ groups may also be a C2-C10 linear alkenyl group, including but not limited to vinyl, allyl, 1-butenyl, 2-butenyl, 1-pentenyl, 2-pentenyl, 3-pentenyl, 1-hexenyl, 2-hexenyl, and 3-hexenyl. Preferably, the R₁, R₂ and R₃ groups may independently be a C2-C5 linear alkenyl group or a C2-C3 linear alkyl group.

In other embodiments, the R₁, R₂ and R₃ groups may also be a C3-C10 branched alkenyl group, including but not limited to isopropenyl, sec-butenyl, tert-butenyl, isobutenyl, isoamylvinyl, neopentenyl, isooctenyl, tert-pentenyl, isodecylvinyl, and tert-hexenyl. Preferably, the R₁, R₂ and R₃ groups may independently be a C3-C5 branched alkenyl group or a C3-C4 branched alkenyl group.

In other embodiments, the R₁, R₂ and R₃ groups may also be a C3-C12 cyclic alkenyl group, including but not limited to cyclobutenyl, cyclopentenyl, cyclohexenyl, cycloheptenyl, cyclooctenyl, cyclononenyl, cyclodecenyl, cycloundecenyl, and cyclododecenyl. Preferably, the R₁, R₂ and R₃ groups may independently be a C3-C6 cyclic alkenyl group.

In other embodiments, the R₁, R₂ and R₃ groups may also be a C2-C10 linear alkynyl group, including but not limited to ethynyl, 1-propyne, 2-propyne, 1-butynyl, 2-butyne, 1-pentenyl, 2-pentyne, 3-pentyne, 1-hexyne, 2-hexyne, and 3-hexyne. Preferably, the R₁, R₂ and R₃ groups may independently be a C2-C5 linear alkynyl group.

In other embodiments, the R₁, R₂ and R₃ groups may also be a C3-C10 branched alkynyl group, including but not limited to isopropynyl, sec-butynyl, tert-butynyl, isobutynyl. Preferably, the R₁, R₂ and R₃ groups may independently be a C3-C5 branched alkynyl group.

In other embodiments, the R₁, R₂ and R₃ groups may also be a C3-C12 cyclic alkynyl group, including but not limited to cyclopropynyl, cyclobutynyl, cyclopentynyl, cyclohexynyl, cycloheptynyl, and cyclooctynyl. Preferably, the R₁, R₂ and R₃ groups may independently be a C3-C6 cyclic alkynyl group.

In other embodiments, the R₁, R₂ and R₃ groups may also be an aromatic group including but not limited to phenyl, naphthalene, anthracene, phenanthrene, benzyl, tolyl, xylyl or biphenyl.

In the case where R₁, R₂ and R₃ are individually selected from linear, branched and cyclic alkyl groups with or without one or more substituents, aromatic groups with or without one or more substituents, linear, branched and cyclic alkenyl groups with or without one or more substituents, linear, branched and cyclic alkynyl groups with or without one or more substituents, the one or more substituents (each substituent replacing a hydrogen atom) may be selected from halogen atoms; aromatic groups; heterocyclic groups; carboxylic acid-containing groups; amine-containing groups; amide-containing groups; urethane containing groups; phosphonic acid-containing groups; sulfonic acid-containing groups; sulfonyl fluoride-containing groups; thioether-containing groups; ether-containing groups; and combinations thereof.

In a preferred variation, the substituents, if present, are selected from halogen atoms.

Each substituent preferably may for example comprise from 0 to 6 carbon atoms, preferably from 0 to 3 carbon atoms, more preferably from 0 to 2 carbon atoms, most preferably 0 or 1 carbon atoms.

The halogen atoms may be Cl, Br, I or F and combinations thereof, more preferably F.

The aromatic groups may include but are not limited to phenyl, naphthalene, anthracene, phenanthrene, benzyl, tolyl, xylyl or biphenyl. The aromatic groups may be preferably unsubstituted, or they may themselves be substituted with one or more substituents as described herein.

The heterocyclic groups may include but are not limited to pyridyl, pyrrolyl, furanyl, thiophenyl, imidazolyl, oxazolyl, thiazolyl, pyrazolyl, indolyl, quinolinyl, isoquinolinyl, benzofuranyl, benzothiophenyl, morpholinyl, or piperidinyl. The heterocyclic groups may be preferably unsubstituted, or they may themselves be substituted with one or more substituents as described herein.

The carboxylic acid-containing groups may be linear and may include but are not limited to C1-C10, preferably C1-C5, more preferably C1-C4, even more preferably C1-C3, most preferably C1-C2 carboxylic acids. The carboxylic acid groups may be preferably unsubstituted, or they may themselves be substituted with one or more substituents as described herein.

The ether-containing groups may be linear and may include but are not limited to C2-C10, preferably C2-C5, more preferably C2-C4, even more preferably C2-C3 ether-containing groups. They may include but are not limited to epoxide groups, oxetane or tetrahydrofuran groups.

The amine-containing groups may be linear and may include but are not limited to C1-C10, preferably C1-C5, more preferably C1-C4, even more preferably C1-C3, most preferably C1-C2 amine-containing groups.

The amide-containing groups may be linear and may include but are not limited to C1-C10, preferably C1-C5, more preferably C1-C4, even more preferably C1-C3, most preferably C1-C2 amide-containing groups.

The urethane-containing groups may be linear and may include but are not limited to C1-C10, preferably C1-C5, more preferably C1-C4, even more preferably C1-C3, most preferably C1-C2 urethane-containing groups.

The thioether-containing groups may be linear and may include but are not limited to C1-C10, preferably C1-C5, more preferably C1-C4, even more preferably C1-C3, most preferably C1-C2 thioether-containing groups.

The phosphonic acid-containing groups may be linear and may include but are not limited to C1-C10, preferably C1-C5, more preferably C1-C4, even more preferably C1-C3, most preferably C1-C2 phosphonic acid-containing groups.

The sulfonic acid-containing groups may be linear and may include but are not limited to C1-C10, preferably C1-C5, more preferably C1-C4, even more preferably C1-C3, most preferably C1-C2 sulfonic acid-containing groups.

The sulfonyl fluoride-containing groups may be linear and may include but are not limited to C1-C10, preferably C1-C5, more preferably C1-C4, even more preferably C1-C3, most preferably C1-C2 sulfonyl fluoride-containing groups.

Preferably, R₁, R₂ and R₃ are selected from a hydrogen atom, a halogen atom, a methyl group, an ethyl group, a propyl group, an isopropyl group, a *n-*butyl group or a perfluoroalkyl group having 1 to 8 carbon atoms; preferably R₁, R₂ and R₃ are selected from a hydrogen atom, a methyl group, a trifluoromethyl group, a fluorine atom, a chlorine atom, a bromine atom; even more preferably R₁, R₂ and/or R₃ is a hydrogen atom, most preferably both are a hydrogen atom.

In some embodiments, n is 0 ; R₁, R₂ and R₃ are selected from a hydrogen atom, a methyl group, a trifluoromethyl group, a fluorine atom, a chlorine atom or a bromine atom.

In some embodiments, n is 1 ; R₁, R₂ and R₃ are selected from a hydrogen atom, a methyl group, a trifluoromethyl group, a fluorine atom, a chlorine atom or a bromine atom.

In some embodiments, n is 2 ; R₁, R₂ and R₃ are selected from a hydrogen atom, a methyl group, a trifluoromethyl group, a fluorine atom, a chlorine atom or a bromine atom.

In some embodiments, n is 3 ; R₁, R₂ and R₃ are selected from a hydrogen atom, a methyl group, a trifluoromethyl group, a fluorine atom, a chlorine atom or a bromine atom.

In a preferred embodiment, n is 0 ; R₁, R₂ and R₃ are each a hydrogen atom (the comonomer is vinyl phosphonic acid (VPA)).

In other preferred embodiments, n is 1 ; R₁, R₂ and R₃ are each a hydrogen atom (the comonomer is allyl phosphonic acid (APA)).

The comonomer of formula (I) may have a molar mass from 100 to 1000 g/mol, more preferably from 100 to 500 g/mol, even more preferably from 100 to 300 g/mol, even more preferably from 100 to 200 g/mol, and most preferably from 100 to 170 g/mol.

### Copolymer

*By "copolymer"* is meant a polymer comprising units deriving from at least two different monomers.

In some embodiments, the copolymer can be a statistical copolymer or an alternating copolymer.

In some embodiments, the copolymer comprises:
- from 1 to 99 mol.%, preferably from 20 to 99 mol.% and even more preferably from 50 to 99 mol.% of the units derived from the fluorinated comonomer(s);
- from 1 to 99 mol.%, preferably from 1 to 80 mol.% and even more preferably from 1 to 50 mol.% of the units derived from the comonomer(s) of formula (I).

For example, the copolymer may comprise from 50 to 55 mol.%; or from 55 to 60 mol.%; or from 60 to 65 mol.%; or from 65 to 70 mol.%; or from 70 to 75 mol.%; or from 75 to 80 mol.%; or from 80 or 85 mol.%; or from 85 to 90 mol.%; or from 90 to 95 mol.%; or from 95 to 99 mol.% of the units derived from the fluorinated comonomer(s).

For example, the copolymer may comprise from 1 to 5 mol.%; or from 5 to 10 mol.%; or from 10 to 15 mol.%; or from 15 to 20 mol.%; or from 20 to 25 mol.%; or from 25 to 30 mol.%; or from 30 or 35 mol.%; or from 35 to 40 mol.%; or from 40 to 45 mol.%; or from 45 to 50 mol.% of the units derived from the comonomer(s) of formula (I).

The copolymer may comprise from 60 to 99 mol.%, preferably from 65 to 98 mol.%, more preferably from 70 to 97 mol.% and even more preferably from 75 to 95 mol.% units derived from the fluorinated comonomer(s).

The copolymer may comprise from 1 to 40 mol.%, preferably from 2 to 35 mol.%, more preferably from 3 to 30 mol.% and even more preferably from 5 to 25 mol.% units derived from the comonomer(s) of formula (I).

The copolymer may comprise at least 50 % by weight, preferably at least 60 % by weight, more preferably at least 70 % by weight, even more preferably at least 80 % by weight, of vinylidene fluoride units, such as from 50 to 99 % by weight, or from 70 to 98 % by weight, or from 80 to 95 % by weight, of vinylidene fluoride units. In this case, the copolymer may also further comprise units derived from at least one other fluorinated comonomer.

The units derived from the comonomers of formula (I) may consist of vinyl phosphonic acid (VPA) units or allyl phosphonic acid (APA) units.

In other embodiments, units derived from the comonomers of formula (I) may comprise VPA and units from one or more other monomers of formula (I) described above.

In other embodiments, units derived from the comonomers of formula (I) may comprise APA and units from one or more other monomers of formula (I) described above.

The composition of the copolymer can be determined for example based on ¹⁹F NMR spectroscopy, ³¹P NMR spectroscopy and ¹H-NMR spectroscopy.

Preferably, the composition of the copolymer is determined by ¹H-NMR spectroscopy after methylation of phosphonic acid groups.

In some embodiments, the copolymer has a number average molar mass from 500 to 100000 g.mol⁻¹, preferably from 1000 to 75000 g.mol⁻¹ and even more preferably from 2000 to 50000 g.mol⁻¹. The number average molar mass may be determined by gel permeation chromatography (GPC) after methylation and matrix assisted laser desorption/ionization (MALDI).

The copolymer according to the present invention may have a degree of crystallinity equal to or lower than 60 %, preferably from 10 to 60 %, and more preferably from 20 to 50 %. The degree of crystallinity may be measured by differential scanning calorimetry (DSC) using for example a DSC200 F3 Maia system, from Netzsch. It corresponds to the percentage ratio (*ΔHₘ x 100)* /*ΔH_{c}* wherein *ΔH_{c}* = 104.5 J.g⁻¹ corresponds to the enthalpy of fusion of a 100 % crystalline PVDF and *ΔHₘ* is the enthalpy of fusion determined by DSC in J.g⁻¹. The DSC temperature ramp protocol includes first leaving at -80°C for 2 min ; then from -80 °C to 160 °C at 10 °C/min ; then leaving 1 min at 160°C ; then cooling to -80°C at 320 °C/min ; then leaving at -80 °C for 1 min and finally running at 10 °C/min to 160 °C.

The copolymer according to the present invention may have a degradation temperature under air equal to or higher than 200 °C, preferably equal to or higher than 250 °C, and more preferably equal to or higher than 300 °C. By *"degradation temperature"* is meant the temperature at which the polymer loses at least 10 % of its weight due to degradation over the heating temperature from -80 °C to 160 °C at 10 °C/min. The degradation temperature can be measured by thermogravimetric analysis (TGA) using for example Q50 equipment from TA Instruments.

In preferred embodiments, the copolymer can be a Poly(VDF-co-VPA) copolymer, or Poly(VDF-co-APA) copolymer, preferably the copolymer is a Poly(VDF-co-VPA) copolymer.

### Preparation of the copolymer

The invention also relates to a method for preparing the copolymer, comprising:
- a first step of putting in contact the at least one comonomer of formula (I) with a polymerization initiator in a solvent;
- a second step of adding the at least one fluorinated comonomer.

In some embodiments, the polymerization initiator is chosen from a peroxide, a persulfate, a percarbonate, a peracid, a peroxycarbonate, a perester, or combinations thereof.

According to preferred embodiments, the polymerization initiator may be chosen from ammonium persulfate, potassium persulfate, sodium persulfate, benzoyl peroxide, hydrogen peroxide, hydrogen peroxide/ascorbic acid, hydrogen peroxide/urea adduct, di-*tert*-butyl peroxide, *tert*-butyl hydroperoxide, *tert-*amyl hydroperoxide, bis(*tert*-butyl cyclohexyl)peroxidicarbonate, cumyl peroxide, cumyl hydroxyperoxide, di-isopropylbenzene hydroperoxide, *tert*-butyl peroxypivalate, *tert-*amyl peroxypivalate, peracetic acid, sodium percarbonate, potassium percarbonate, ammonium percarbonate and combinations thereof.

Preferably, the polymerization initiator is a di-tert-butyl peroxide, even more preferably the polymerization initiator is 2,5-dimethyl-2,5-di-(tert-butylperoxy)hexane.

The polymerization initiator may be added at a content from 0.03 to 4 mol.%, preferably from 0.1 to 2 mol. % relative to the sum of comonomers (fluorinated comonomer and comonomer of formula (I) as detailed above) to be polymerized. This content may be from 0.03 to 0.1 mol %; or from 0.1 to 0.5 mol %; or from 0.5 to 1 mol %; or from 1 to 1.5 mol %; or from 1.5 to 2 mol %; or from 2 to 2.5 mol %; or from 2.5 to 3 mol %; or from 3 to 3.5 mol %; or from 3.5 to 4 mol %.

In the first step, the relative amount of the comonomer of formula (I) to the polymerization initiator may be from 50 to 5000 mol. %, preferably from 100 to 4000 mol. %, more preferably from 150 to 3000 mol. %, even more preferably from 200 to 2000 mol. % and most preferably from 250 to 1000 mol. %.

In some embodiments, the solvent is a polar protic solvent, a polar aprotic solvent or a mixture thereof.

By *"polar"* is meant a molecule that has a dipole moment equal to or higher than 1.5 D at 25 °C, and preferably equal to or higher than 3 D, or 4 D, or 4.5 D, or 5 D at 25 °C. The dipole moment can be measured by using a dipole meter and by interpretation of the results using the Debye Huckel equation.

By *"aprotic"* is meant a molecule which does not contain any acidic hydrogen and thus does not act as a hydrogen bond donor. In particular, the aprotic molecule is free of -OH, -NH, -SH, and -PH groups.

The polar protic solvent can be chosen from water or acetic acid. Preferably, the polar protic solvent is water.

The polar aprotic solvent can be chosen from acetonitrile, methyl acetate, dimethylcarbonate, propylene carbonate, ethylene carbonate, acetone, cyclohexanone, cyclopentanone dimethylacetamide, N,N-diméthylformamide, N-methyl-2-pyrrolidone, N-formylmorpholine, trimethyl phosphate, triethyl phosphate, hexamethylphosphoramide, dimethylsulfoxide or fluorinated solvents such as 1,1,1,3,3-pentafluorobutane, 1-chloro-2,2-difluoroethane, 1-chloro-1,1-difluoroethane and perfluorocyclohexane.

Preferably, the polar aprotic solvent is dimethyl carbonate or acetonitrile.

Preferably, the mixture of polar protic and polar aprotic solvents is a mixture of water and acetonitrile.

In some embodiments, the comonomer(s) of formula (I) and the fluorinated comonomer(s) may be introduced into the reactor at ambient temperature.

In some embodiments, the reactor can be initially cooled to a temperature of for example from -175 to -25 °C, more preferably from -150 to -50 °C and even more preferably from -125 to -75 °C. The fluorinated comonomer(s) can be transferred to the reactor preferably as a liquid feed. The fluorinated comonomer(s) may be introduced at a temperature for instance from -196 °C to 0 °C. Different introduction temperatures may be used for the different comonomers.

Once all the reactants have been put in contact, the reactor can be heated and stirred to start the reaction.

In some embodiments, the polymerization is carried out at a temperature from 40 to 200 °C, more preferably from 75 to 175 °C and even more preferably from 100 to 150 °C. The temperature may remain substantially constant for a period of time ranging from 1 minute to 24 hours, and preferably from 10 minutes to 10 hours.

In some embodiments, the polymerization time is from 30 minutes to 100 h, preferably from 1h to 80h and even more preferably from 2 h to 24 h.

In some embodiments, the polymerization is carried out at a pressure from 1 to 100 bar, preferably from 5 to 60 bar and even more preferably from 15 to 50 bar.

Preferably, the method according to the present invention may be carried out under inert atmosphere for example under nitrogen or argon atmosphere.

In addition, the method according to the present invention can be carried out in a solution, a suspension or an emulsion.

The method according to the present invention can be carried out in an autoclave.

In some alternative embodiments, the polymerization can be performed in a tube, such as a borosilicate tube. For example, the different reactants including the polymerization initiator and optionally the solvent can be added in the tube. The tube may then be degassed, and the required amount of the monomers may then be transferred into the tube accurately by means of a manifold. The tube can be sealed under dynamic vacuum at the temperature of liquid nitrogen. Then, it may be inserted in a custom designed heated and shaken apparatus regulated at the desired temperature.

According to some embodiments, the method according to the invention may comprise one or more purification steps. Such steps include common purification methods for the skilled person, such as washing, precipitation, filtering, drying and the like.

### Use of the copolymer

The invention also relates to the use of the copolymer as a powder for complexing heavy metals to purify water, as a coating agent especially for flame retardancy and corrosion protection, as an electrode binder for a rechargeable battery, or for making a membrane, notably for water filtration or to conduct protons in a proton-exchange membrane fuel cell.

The membrane can be produced using a variety of methods, all of which are well-known to the person skilled in the art. For example, the membrane can be produced by phase inversion, electrospinning, thermally induced phase separation, solution casting or melt extrusion.

The coating agent may be suitable for application on a variety of substrates, including metals, ceramics, glass, various fibrous materials such as textiles or glass fibers, various polymeric materials such as polycarbonate, polypropylene, polyethylene, polyester. Preferably, the coating agent is applied to metals. The metal may be steel, aluminum or copper.

The rechargeable battery may be a Li-ion battery, a Na-ion battery or a K-ion battery.

### Examples

The following example illustrates the invention without limiting it.

### Example 1: synthesis of poly(vinylidene fluorine-co-vinyl phosphonic acid) copolymer (Poly(VDF-co-VPA))

The radical copolymerization of VDF and VPA was performed in a 50 mL Hastelloy autoclave Parr system (HC 276) equipped with a manometer, a mechanical Hastelloy anchor, a rupture disk (2000 PSI), inlet and outlet valves, and a Parr electronic controller for managing both stirring speed and heating. A mixture of VPA and a radical initiator dissolved in 30 mL of the selected solvent (DMC or acetonitrile/water mixture) was degassed by N₂ bubbling for 30 min prior to input. Meanwhile, the autoclave was applied under vacuum for 15 min to remove oxygen, and the degassed solution was transferred into the vacuumed autoclave via a funnel tightly connected to the inlet valve of the autoclave. After loading, the autoclave was cooled to approximately -100 °C to get VDF in a liquid form that was transferred through the inlet valve with measuring its amount by double weighing (the weight difference of before and after gas filling). The reactor was warmed to 0 °C then heated to the target temperature (115 °C) by an electric heating mantle under mechanical stirring, while pressure and temperature changes were recorded. The reaction was stopped after a significant pressure drop was confirmed, and the vessel was subsequently cooled in an ice bath for 30 minutes. The unreacted gaseous VDF monomer was released, and the weight of the released gas was used to approximate the VDF conversion. The product was transferred to a round-bottom flask and the residual liquids were removed under vacuum, followed by redispersion in acetone and precipitation from cold pentane. The solids were collected after oven drying overnight, as pale yellow to dark brown powders. To remove unreacted VPA and water-soluble impurities, the solids were soaked into deionized water and put into dialysis membranes upon excess water. The reservoir was discarded twice a day up to three days, and the water-soluble product inside the membrane was separated from the insoluble sediments by decantation or centrifugation. A VDF-rich product and a VPA-rich product were recovered by freeze-drying to yield pale yellow to brown powders.

Different samples were prepared by varying the initial VDF:VPA ratio, solvent reaction time and pressure (Table 1).

**Table 1**

| Samples | A | B | C | D | E | F | G | H |
|---|---|---|---|---|---|---|---|---|
| VDF:VP A ratio | 90:10 | 80:20 | 60:40 | 90:10 | 95:5 | 80:20 | 70:30 | 60:40 |
| Solvent | DMC | DMC | DMC | CH₃C N/H₂O (90:10) | CH₃C N/H₂O (90:10) | CH₃C N/H₂O (90:10) | CH₃C N/H₂O (90:10) | CH₃C N/H₂O (90:10) |
| Reaction time (h) | 6 | 4 | 17 | 18 | 18 | 20 | 20 | 39 |
| ΔP (bar) | 30 | 20 | 14 | 35 | 36 | 33 | 28 | 22 |
| Yield VDF-rich (%) | 66 | 46 | 29 | 40 | 53 | 41 | 30 | 19 |
| Yield VPA-rich (%) | 5 | 6 | 15 | 2 | 0.6 | 4 | 13 | 6 |

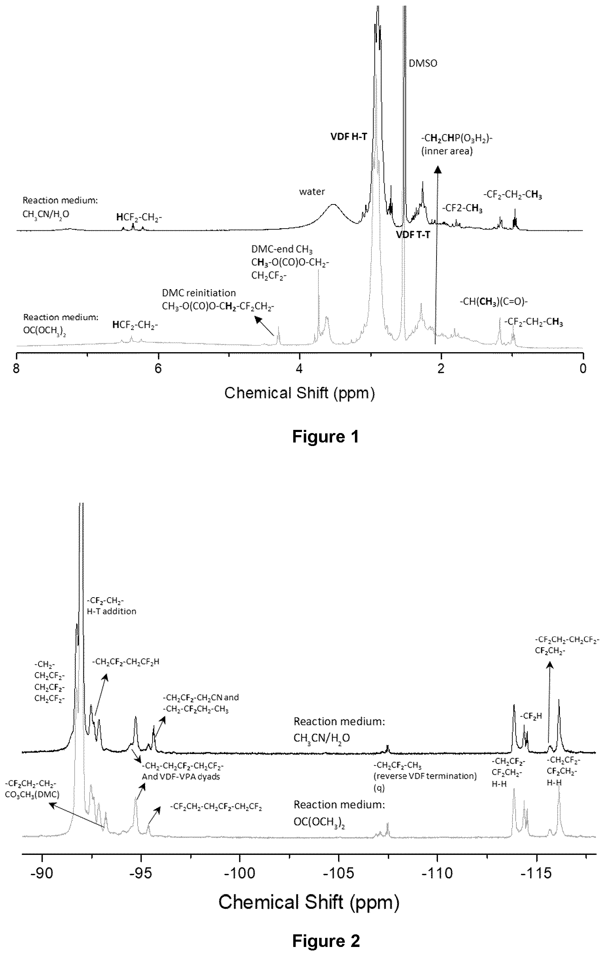

The presence of each unit conformation of sample H was characterized by ¹H, ¹⁹F and ³¹P nuclear magnetic resonance (NMR) spectroscopy (Figures 1, 2 and 3).

¹H NMR (Figure 1, 400 MHz, DMSO-d6, δ (ppm)) = 0.99 (t, ³J_{HH} = 7.4 Hz,-CF₂-CH₂-CH₃, 3H), 1.16-1.20 (d, ³J_{HH} = 8.9 Hz, -CH(C**H**₃)(C=O)-, 3H, for the copolymers synthesized in DMC), 1.6-2.4 [m, -CF₂CH₂-C**H**₂C**H**PO(OH)₂, 3H], 1.82 (t, ³J_{HF} = 19.5 Hz, -CH₂-CF₂-C**H₃**, 3H), 2.25 (m, -CF₂C**H₂**-C**H₂**CF₂-, 2H, T-T reverse addition), 2.93 (m, ³J_{FH} = 15.2 Hz, -CF₂-C**H₂**-CF₂-, 2H, VDF H-T normal addition), 3.69 (s, -CF₂CH₂-CH₂(O=C)-O-C**H₃**, 3H), 4.30 (t, ³J_{HH} = 6.17 Hz, -CF₂CH₂-C**H₂**(O=C)-O-CH₃, 2H), 4.50 (t, ³J_{HF} = 13.4 Hz, -CH₂CF₂-C**H₂**(O=C)-O-CH₃, 2H), 6.20-6.55 (tt, ²J_{HF} = 54.8 Hz, ³J_{HH} = 4.1 Hz, -CH₂-CF₂**H**, 1H, originated from a proton transfer or backbiting).

¹⁹F NMR (Figure 2, 377 MHz, DMSO-d6, δ (ppm)) = -91.9 (-CF₂-CH₂-, VDF H-T normal addition), -92.4 and -92.8 (-CH₂C**F₂**-CH₂CF₂-H), -93.2 (-C**F₂**CH₂-CH₂-O(C=O)-CH₃, VDF adjacent to DMC end), -94.7 (-CH₂-CH₂C**F₂**-CH₂CF₂-, adjacent to a T-T reverse addition), -95.6 (-CH₂-C**F₂**CH₂-CH₃ or - C**F₂**CH₂-CH₂CN), -107.4 (-CH₂C**F₂**-CF₂CH₃, reverse VDF termination), -113.8 (-CH₂C**F₂**-CF₂CH₂-, VDF H-H inversion), -114.4 (dm; ²J_{FH} = 54.9 Hz, -CF₂H), - 115.6 (-CF₂CH₂-CH₂CF₂-C**F₂**CH₂-CH₂CF₂-) and -116.1 (-CF₂CH₂-CH₂C**F**₂-CF₂CH₂-,VDF H-H inversion next to T-T inversion).

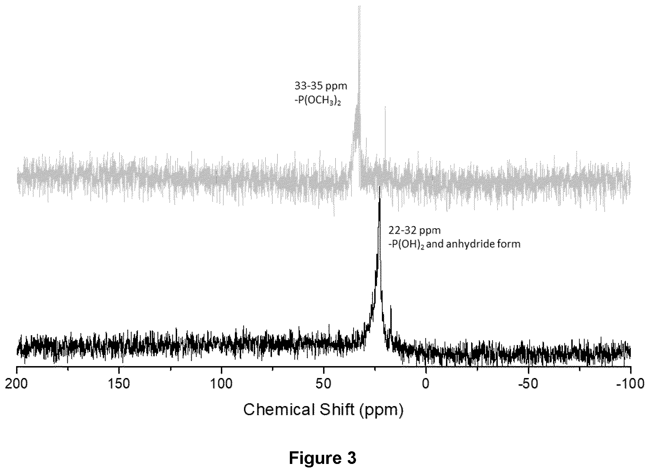

³¹P NMR (Figure 3, 162 MHz, DMSO-d6, *δ* (ppm)) =38 (-PO(OCH₃)₂), 26 (-PO(OH)₂ in polymers), 20 (P anhydride rings), 12 ((-PO(OH)₂, unreacted monomers remained).

### Example 2: properties of VDF rich-poly(vinylidene fluorine-co-vinyl phosphonic acid) copolymers (Poly(VDF-co-VPA))

The average molar mass, dispersity and thermal properties of the various VDF-rich samples A to H of example 1 were characterized and illustrated in Table 2.

The average molar mass and the dispersity of the samples were determined by ¹H, ¹⁹F and ³¹P nuclear magnetic resonance (NMR) spectroscopy, gel permeation chromatography (GPC) after methylation of the VDF rich samples and matrix-assisted laser desorption/ionization (MALDI). The methylated-VDF rich samples were prepared by methylation with trimethylsilyldiazomethane according to the protocol described in the research article "13C, and 31P NMR study on poly(vinylphosphonic acid) and its dimethyl ester" by H." Komber et al., Macromolecules 41, 6, 2119 (2008).

The thermal properties were studied by thermogravimetric analysis (TGA) and differential scanning calorimetry (DSC).

**Table 2**

| Samples | VDF-rich A | VDF-rich B | VDF-rich C | VDF-rich D | VDF-rich E | VDF-rich F | VDF-rich G | VDF-rich H |
|---|---|---|---|---|---|---|---|---|
| Average molar mass Mn (g.mol⁻¹) | 22000 | 14000 | 12000 | 17000 | 17000 | 18000 | 16000 | 17000 |
| Dispersity | 1.52 | 1.48 | 1.28 | 1.61 | 1.49 | 1.44 | 1.39 | 1.25 |
| Degradation temperature (°C) | 357 | 343 | 304 | 341 | 341 | 342 | 315 | 309 |
| Degree of cristallinity X (%) | 33 | 40 | 27 | 47 | 44 | 41 | 39 | 34 |

### Example 3: Anti-corrosive properties of VDF rich-poly(vinylidene fluorine-co-vinyl phosphonic acid) copolymers (Poly(VDF-co-VPA))

Different VDF-rich poly(VDF-*co*-VPA) copolymers were prepared according to the protocol described in example 1 by varying the VDF:VPA ratio (Table 3). Comparative homopolymers (PVDF and PVPA) were also prepared (Table 3).

**Table 3**

| Samples | I (inv) | J (inv) | L (comp) | M (comp) |
|---|---|---|---|---|
| VDF:VPA ratio | 83:17 | 97:3 | 100:0 | 0:100 |
| Degree of crystallinity X (%) | 36 | 34 | 54 | no crystallinity |

Samples I and J were dispersed in DMF (10 % by weight) and cast on a piece of steel. As a reference (assay K) a raw piece of steel, not coated by a polymer, was used. Comparative samples L and M (PVDF homopolymer and PVPA homopolymer respectively) were also dispersed in DMF (10 % by weight) and cast on a piece of steel. All steel samples were placed in a saline solution (35 % NaCl by weight) for 30 min, 1 h, 2 h, 4 h and 9 h. The results are shown in Table 4, wherein signs of corrosion are denoted according to the following scale: - meaning no trace of rust, + meaning slight traces of rust, ++ meaning clearly visible rust and +++ meaning significant signs of rust.

**Table 4**

| Samples | I (inv) | J (inv) | K (comp) |
|---|---|---|---|
| 30 min | - | - | - |
| 1 h | - | - | - |
| 2 h | - | - | + |
| 4 h | - | - | ++ |
| 9 h | + | + | +++ |

Sample L did not adhere to the steel. Sample M dissolved in the saline solution after casting.

### Example 4: Adhesive properties of VDF rich-poly(vinylidene fluorine-co-vinyl phosphonic acid) copolymers (Poly(VDF-co-VPA))

Different VDF-rich poly(VDF-co-VPA) copolymers were prepared according to the protocol described in example 1 by varying the VDF:VPA ratio (Table 5). A comparative PVDF homopolymer was also prepared (Table 5).

**Table 5**

| Samples | N | O | P |
|---|---|---|---|
| VDF:VPA ratio | 84:6 | 69:31 | 100:0 |
| Degree of crystallinity X (%) | 37 | none | 54 |

Samples N and O (according to the invention) and sample P (comparative) were dispersed in DMF (10 % by weight) and cast on a piece of steel. The adhesive properties of the samples were investigated using the cross-cut test according to ISO2409:2020. In that respect, the samples were scratched with a 5 blade-instrument horizontally and vertically before a tape was applied to the surface of the coated steel samples. The tape was then removed, and the test was validated if the polymer layer was still attached to the surface of the metal. Otherwise, the test was considered to have failed. The results are shown in Table 6.

**Table 6**

| Samples | N (inv) | O (inv) | P (comp) |
|---|---|---|---|
| Peeling the tapes | Pass | Pass | Fail |

## Claims

1. A copolymer comprising units derived from at least one fluorinated comonomer and at least one comonomer of formula (I): 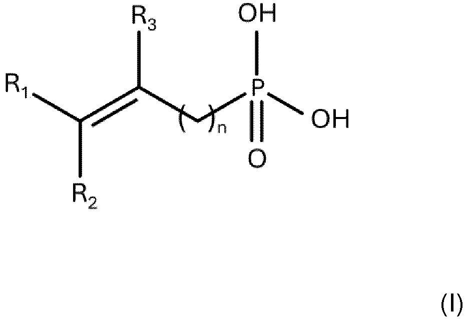
wherein R₁, R₂ and R₃ are individually selected from the group consisting of: hydrogen atoms; halogen atoms; carboxyl group; carboxylic acid groups; ether groups; thioether groups; amine groups; amide groups; sulfonimide groups; urethane groups, a phosphonic acid group; a sulfonic acid group; a sulfonyl fluoride group; linear, branched and cyclic alkyl groups with or without one or more substituents; aromatic groups with or without one or more substituents; linear, branched and cyclic alkenyl groups with or without one or more substituents; linear, branched and cyclic alkynyl groups with or without one or more substituents;
the substituents being selected from halogen atoms; aromatic groups; heterocyclic groups; carboxylic acid-containing groups; amine-containing groups; amide-containing groups; urethane-containing groups; phosphonic acid-containing groups; sulfonic acid-containing groups; sulfonyl fluoride-containing groups; thioether-containing groups and ether-containing groups;
wherein n is from 0 to 5, preferably from 0 to 3, even more preferably from 0 to 2.

2. The copolymer according to claim 1, wherein the fluorinated comonomer is selected from the group consisting of vinylidene fluoride, vinyl fluoride; trifluoroethylene (VF₃); chlorotrifluoroethylene (CTFE); 1,2-difluoroethylene; tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE), perfluoro(propylvinyl)ether (PPVE), perfluoro(1,3-dioxole), perfluoro(2,2-dimethyl-1,3-dioxole) (PDD); the compound of formula F₂C=CF-CₐF₂ₐ₊₁ in which a is 1, 2, 3, 4, 6, 8, 10; compounds of formula CF₂=CFOCF₂CF(CF₃)OCF₂CF₂X in which X is SO₂F, CO₂H, CH₂OH, CH₂OCN or CH₂PO₃H; the compound of formula CF₂=CFOCF₂CF₂SO₂F; the compound of formula CF₂=CFO(CF₂)₄SO₂F; the compound of formula F₂C=CF-Y, in which Y is a phenyl group; the compound of formula F(CF₂)_{b}CH₂OCF=CF₂ in which b is 1, 2, 3, 4 or 5; the compound of formula R⁴CH₂OCF=CF₂ in which R⁴ is hydrogen or F(CF₂)_{c} and c is 1, 2, 3 or 4; the compound of formula R⁵OCF=CH₂ in which R⁵ is F(CF₂)_{d} and d is 1, 2, 3 or 4; perfluorobutyl ethylene (PFBE); compounds of formula H₂C=CH-CₑF₂ₑ₊₁ in which e is 4, 6 or 8; compounds of formula H₂C=CF-CO₂R⁶ in which R⁶ is H or C_{f}H_{2f+1} in which f is 1 to 10; compounds of formula F₂C=CF-CO₂R⁷ in which R⁷ is H or C_{g}H_{2g+1} in which g is 1 to 10; compounds of formula F₂C=C(CF₃)-CO₂R⁸ in which R⁸ is H or CₕH₂ₕ₊₁ in which h is 1 to 10; compounds of formula F₂C=C(CH₃)-CO₂R⁹ in which R⁹ is H or CₕH₂ₕ₊₁ in which h is 1 to 10; 3,3,3-trifluoropropene; 2,3,3,3-tetrafluoropropene; (E)-1,3,3,3-tetrafluoropropene; (Z)-1,3,3,3-tetrafluoropropene; hexafluoroisobutylene; perfluorobutylethylene; pentafluoropropene; bromotrifluoroethylene; chlorofluoroethylene; chlorotrifluoropropene; and combinations thereof; wherein, preferably, the fluorinated comonomer comprises or is vinylidene fluoride.

3. The copolymer according to any one of claims 1 and 2, wherein R₁, R₂ and R₃ are selected from a hydrogen atom, a halogen atom, a methyl group, an ethyl group, a propyl group, an isopropyl group, a n-butyl group or a perfluoroalkyl group having 1 to 8 carbon atoms; preferably R₁ and R₂ are selected from a hydrogen atom, a methyl group, a trifluoromethyl group, a fluorine atom, a chlorine atom; a bromine atom even more preferably R₁, R₂ and/or R₃ is a hydrogen atom, most preferably both are a hydrogen atom.

4. The copolymer according to any one of claims 1 to 3, comprising:
- from 1 to 99 mol.%, preferably from 20 to 99 mol.% and even more preferably from 50 to 99 mol.% of the units derived from the fluorinated comonomer(s);
- from 1 to 99 mol.%, preferable from 1 to 80 mol.% and even more preferably from 1 to 50 mol.% of the units derived from the comonomer(s) of formula (I).

5. The copolymer according to any one of claims 1 to 4, having a number average molar mass from 500 to 100000 g.mol⁻¹, preferably from 1000 to 75000 g.mol⁻¹ and even more preferably from 2000 to 50000 g.mol⁻¹.

6. A method for preparing the copolymer according to any one claims 1 to 5, comprising:
- a first step of putting in contact the at least one comonomer of formula (I) with a polymerization initiator in a solvent;
- a second step of adding the at least one fluorinated comonomer.

7. A method according to claim 6 wherein the polymerization initiator is chosen from a peroxide, a persulfate, a percarbonate, a peracid, a peroxycarbonate, a perester, or combinations thereof.

8. A method according to any one of claims 6 and 7, wherein the solvent is a polar protic solvent, a polar aprotic solvent or a mixture thereof.

9. A method according to any of claims 6 to 8, wherein the polymerization is carried out at a temperature from 40 to 200 °C, more preferably from 75 to 175 °C and even more preferably from 100 to 150 °C.

10. A method according to any of claims 6 to 9, wherein the polymerization time is from 30 min to 100 h, preferably from 1 h to 80 h and even more preferably from 2 h to 24 h.

11. A method according to any of claims 6 to 10, wherein the polymerization is carried out at a pressure from 1 to 100 bar, preferably from 5 to 60 bar and even more preferably from 15 to 50 bar.

12. The use of the copolymer according to claims 6 to 11 as a powder for complexing heavy metals to purify water, as a coating agent especially for flame retardancy and corrosion protection, as an electrode binder for a rechargeable battery, or for making a membrane, notably for filtrating water or to conduct protons in a proton-exchange membrane fuel cell.
